# EUROPEAN PATENT APPLICATION

(11) **EP 3 869 011 A1**
(43) Date of publication of application: **25.08.2021**
(21) Application number: 21158164.0
(22) Date of filing: 19.02.2021
(51) Int. Cl.: F01D 5/28

(54) **CERAMIC MATRIX COMPOSITE COMPONENT HAVING LOW DENSITY CORE AND METHOD OF MAKING**

(30) Priority: 21.02.2020 US 202016797133
(71) Applicant: Raytheon Technologies Corporation, Farmington, CT 06032 (US)
(72) Inventor: MCCAFFREY, Michael G., Windsor, CT 06095 (US); DUBE, Bryan P., Columbia, CT 06237 (US)
(74) Representative: Dehns

(57) **Abstract**

Disclosed is a ceramic matrix component having a fibrous core and a ceramic matrix composite shell (130) surrounding at least a portion of the fibrous core (120). The fibrous core has a three dimensional braided structure and cooling passages (170). A method of making the ceramic matrix component is also disclosed.

## Description

### BACKGROUND

Exemplary embodiments pertain to the art of ceramic matrix composite components.

Ceramic matrix composite (CMC) materials have been proposed as materials for certain components of gas turbine engines, such as the turbine blades and vanes. Various methods are known for fabricating CMC components, including melt infiltration (MI), chemical vapor infiltration (CVI) and polymer pyrolysis (PIP) processes. These methods all employ a fibrous preform in which some of the internal layers are trimmed to create a variable thickness ceramic matrix composite component. While these internal layers are less structurally challenged they still contribute to the shape and structure of the component. Methods to improve the strength as well as the radial and torsional stiffness of CMC components are desired.

### BRIEF DESCRIPTION

Disclosed is a ceramic matrix component (e.g. made according to the method disclosed herein) having a fibrous core and a ceramic matrix composite shell surrounding at least a portion of the fibrous core. The fibrous core has a three dimensional braided structure and cooling passages.

In addition to one or more of the features described above, or as an alternative to any of the foregoing embodiments, the ceramic matrix component may be an airfoil. The component, e.g. airfoil, may have a root and the core may have cooling passages in the root portion. The cooling passages may be located in a radial direction. The cooling passages in the fibrous core may terminate at a leading edge, a trailing edge or both. The cooling passages in the fibrous core may connect to passages in the ceramic matrix composite shell.

In addition to one or more of the features described above, or as an alternative to any of the foregoing embodiments, the fibrous core may further include a ceramic foam. The ceramic foam may be present at a leading edge, a trailing edge or both.

In addition to one or more of the features described above, or as an alternative to any of the foregoing embodiments, the ceramic matrix component may be a combustor component, vane, blade, vanes, ceramic box shroud, or nozzle component.

Also disclosed is a method of making a ceramic matrix component (e.g. a component as herein described). The method includes forming a fibrous core having a three dimensional braided structure with carbon and ceramic fibers, partially densifying the fibrous core, pyrolyzing the carbon fibers to form passages (e.g. cooling passages), forming a fibrous preform on the partially densified fibrous core, and forming a ceramic matrix on the fibrous preform using chemical vapor infiltration.

In addition to one or more of the features described above, or as an alternative to any of the foregoing embodiments, the ceramic matrix component may be an airfoil. The passages (e.g. cooling passages) may be located in a radial direction. The passages (e.g. cooling passages) in the fibrous core may terminate at a leading edge, a trailing edge or both.

In addition to one or more of the features described above, or as an alternative to any of the foregoing embodiments, the fibrous core may further comprise a ceramic foam. The ceramic foam may be present at a leading edge, a trailing edge or both.

In addition to one or more of the features described above, or as an alternative to any of the foregoing embodiments, the fibrous core may have a porosity greater than the porosity of the fibrous preform. The porosity of the fibrous core may be 2 to 3 times greater than the porosity of the fibrous preform.

In addition to one or more of the features described above, or as an alternative to any of the foregoing embodiments, the ceramic matrix component may be a combustor component, vane, blade, vanes, ceramic box shroud, or nozzle component.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a perspective view of a CMC component; and
FIG. 3 is a cross sectional view along line 2-2 of FIG. 2.

### DETAILED DESCRIPTION

A detailed description of one or more embodiments of the disclosed apparatus and method are presented herein by way of exemplification and not limitation with reference to the Figures. The CMC component and method of making the CMC component address several needs - the use of a fibrous core having a three dimensional braided structure with carbon and ceramic fibers leads to a core which can provide torsional and radial stiffness while also providing passages for cooling. Additionally, the fibrous core can have greater porosity which offers access to the interior of the preform during CVI. Access to the interior of the preform improves infiltration and results in a CMC component with more uniform density.

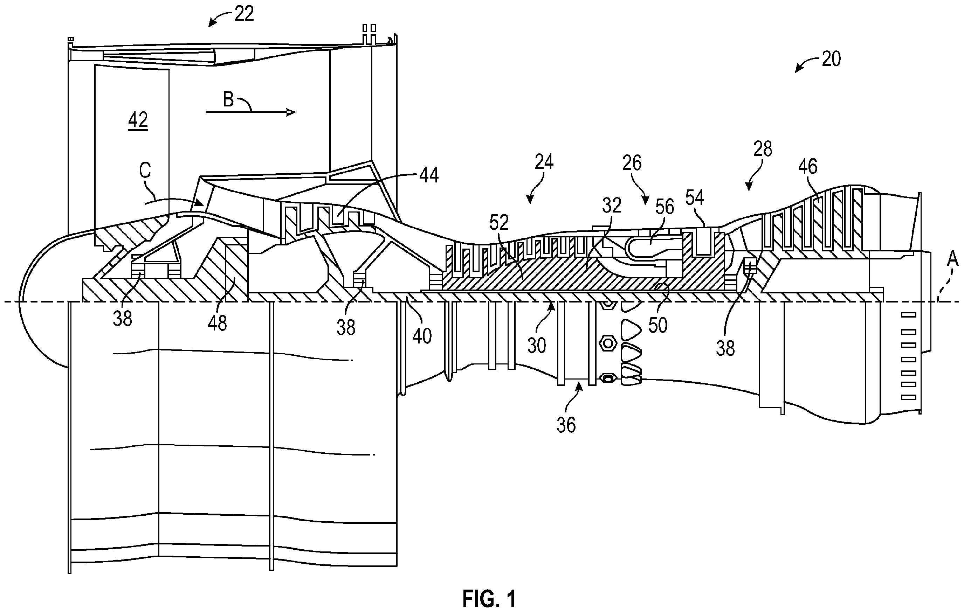

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

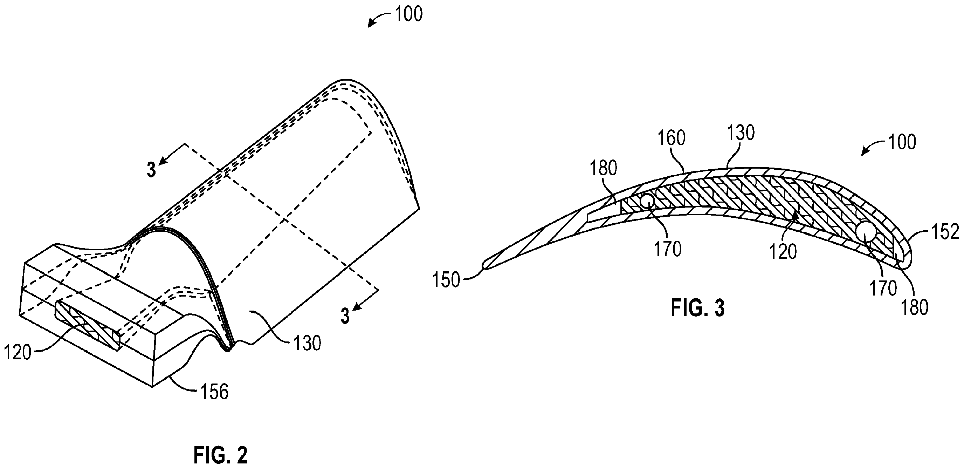

FIG. 2 is a perspective view of a ceramic matrix composite (CMC) component 100. In one embodiment, component 100 is, but not limited to, gas turbine engine components, including combustor components, high pressure turbine vanes and blades, and other hot section components, such as but not limited to, airfoils, vanes, ceramic box shrouds and nozzle applications. As shown in FIGS. 2-3, the CMC component 100 is a blade. Component 100 includes a fibrous core 120 and a ceramic matrix composite (CMC) shell 130 surrounding at least a portion of fibrous core 120. Fibrous core 120 remains in place during operation of CMC component 100. Fibrous core 120 is formed in part from a material that withstands the CMC curing process and becomes a part of the final CMC component 100. Component 100 also has a root 156 and core 120 extends into the root. It is also contemplated that in the root the core may include channels as cooling passages (not shown), for the introduction of matrix precursors during CVI, or a combination thereof.

Material for the fibrous core 120 includes, but is not limited to, carbon, and one or more of Al₂O₃-SiO₂, SiC, silicon dioxide (SiO₂), aluminum silicate, aluminum oxide (Al₂O₃), titanium oxide (TiO₂), zirconium silicate, silicon nitride, boron nitride (BN), and combinations thereof. The fibrous core 120 has a three dimensional braided structure which includes carbon fibers and ceramic fibers. The fibrous core incorporates carbon fiber which is interwoven in the three dimensional braid. By interweaving the carbon fibers the integrity of the braid is not compromised when the carbon fibers are removed by pyrolysis - the ceramic fibers are intact and the removal of the carbon fibers results in cooling passages. The carbon fibers in the fibrous core may be predominantly located in the radial direction (root to tip) and may terminate or exit the fibrous core at the leading edge, trailing edge or both.

Additionally, fibrous core 120 may have a porosity greater than the porosity of the preform used in the formation of the CMC shell 130. For example, the fibrous core 120 may have a porosity that is 2 to 3 times greater than the porosity of the shell preform.

The fibrous core may further include a ceramic foam portion. The ceramic foam portion may be located centrally in the fibrous core and be at least partially surrounded by fibers or the ceramic foam may be disposed between the braided or woven portion of the fibrous core and the CMC shell 130. It is further contemplated that the fibrous core may include ceramic foam at the leading edge, trailing edge or both to facilitate the formation of a sharp edge. Using a ceramic foam at these locations offers the advantage of being able to machine the material without damaging fiber continuity.

CMC shell 130 includes a preform and a ceramic matrix. The preform includes reinforcing fibers such as those used in the fibrous core. In some embodiments the fibrous core and the preform employ the same type of fiber such as SiC. The matrix material may include silicon carbide (SiC), silicon oxide (SiO₂), boron nitride (BN), boron carbide (B₄C), aluminum oxide (Al₂O₃), zirconium oxide (ZrO₂), zirconium boride (ZrB₂), zinc oxide (ZnO₂) molybdenum disulfide (MoS₂), silicon nitride (Si₃N₄), and combinations thereof. In some embodiments a SiC fiber preform is used in combination with a SiC matrix and a SiC/C fiber core. The preform may incorporate carbon fibers extending from the fibrous core. Incorporating carbon fibers extending from the core permits the formation of cooling passages to the surface of CMC component 100 without damage to the preform fibers. In some cases cooling passages in the fibrous core connect to passages in the CMC shell 130 that have been formed by laser machining.

As shown in FIG. 3, component 100 is a blade having a leading edge 152 and a trailing edge 150. CMC shell 130 of the blade surrounds at least a portion of the fibrous core. The CMC shell 130 may completely surround the fibrous core 120. The sidewalls 160 of the CMC shell 130 are adjacent to the fibrous core 120 and generally joined by fibrous core 120. The fibrous core 120 has cooling passages 170. The fibrous core may have ceramic foam 180.

The fibrous core is partially densified by CVI or PIP prior to contacting the preform fibers. The carbon fibers may be removed by pyrolysis after the partial densification or after formation of the CMC shell.

Fibrous core 120 functions as a mandrel in fabricating CMC component 100. Fibrous core 120 receives or is wrapped by the reinforcing fibers of the preform. The preform includes uniaxial fiber layup, 2D woven fabric layup, 3D weave or a combination thereof. If carbon fibers from the fibrous core extend from the core these fibers may be incorporated into the preform. The preform is infiltrated with the matrix or a matrix precursor. The matrix may be deposited using chemical vapor infiltration (CVI) or other appropriate methods.

If carbon fibers are present after formation of the CMC shell they may be removed by pyrolysis. The distribution and size of the carbon fibers or carbon fiber bundles may be selected by location with a larger concentration and/or larger size near the leading edge, trailing edge, or both.

The CMC shell 130 may have a thickness of 0.03 inch (0.76mm) to >0.10 inch (>2.5mm). The CMC shell thickness may vary over the length of the blade and may be thicker near the root compared to the tip.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

Certain embodiments of the present disclosure are as follows:
1. A ceramic matrix component having a fibrous core and a ceramic matrix composite shell surrounding at least a portion of the fibrous core wherein the fibrous core has a three dimensional braided structure and cooling passages.
2. The ceramic matrix component of embodiment 1, wherein the ceramic matrix component is an airfoil.
3. The ceramic matrix component of embodiment 2, wherein the airfoil has a root and the core has cooling passages in the root portion.
4. The ceramic matrix component of embodiment 2, wherein the cooling passages are located in a radial direction.
5. The ceramic matrix component of embodiment 2, wherein the cooling passages in the fibrous core terminate at a leading edge.
6. The ceramic matrix component of embodiment 2, wherein the cooling passages in the fibrous core terminate at the trailing edge.
7. The ceramic matrix component of embodiment 2, wherein the cooling passages in the fibrous core connect to passages in the ceramic matrix composite shell.
8. The ceramic matrix component of embodiment 1, wherein the fibrous core further comprises a ceramic foam.
9. The ceramic matrix component of embodiment 8, wherein the ceramic foam is present at a leading edge, a trailing edge or both.
10. The ceramic matrix component of embodiment 1, wherein the component is a combustor component, vane, blade, vanes, ceramic box shroud, or nozzle component.
11. A method of making a ceramic matrix component comprising forming a fibrous core having a three dimensional braided structure with carbon and ceramic fibers, partially densifying the fibrous core, pyrolyzing the carbon fibers to form passages, forming a fibrous preform on the partially densified fibrous core, and forming a ceramic matrix on the fibrous preform using chemical vapor infiltration.
12. The method of embodiment 11, wherein the ceramic matrix component is an airfoil.
13. The method of embodiment 12, wherein the passages are located in a radial direction.
14. The method of embodiment 12, wherein the passages in the fibrous core terminate at a leading edge.
15. The method of embodiment 12, wherein the passages in the fibrous core terminate at the trailing edge.
16. The method of embodiment 11, wherein the fibrous core further comprises a ceramic foam.
17. The method of embodiment 16, wherein the ceramic foam is present at a leading edge, a trailing edge or both.
18. The method of embodiment 11, wherein the fibrous core has a porosity greater than the porosity of the fibrous preform.
19. The method of embodiment 18, wherein the porosity of the fibrous core is 2 to 3 times greater than the porosity of the fibrous preform.
20. The method of embodiment 11, wherein the component is a combustor component, vane, blade, vanes, ceramic box shroud, or nozzle component.

## Claims

1. A ceramic matrix component having a fibrous core and a ceramic matrix composite shell surrounding at least a portion of the fibrous core wherein the fibrous core has a three dimensional braided structure and cooling passages.

2. The ceramic matrix component of claim 1, wherein the ceramic matrix component is an airfoil, combustor component, vane, blade, vanes, ceramic box shroud, or nozzle component.

3. The ceramic matrix component of claim 2, wherein the airfoil has a root and the core has cooling passages in the root portion.

4. The ceramic matrix component of any one of the preceding claims, wherein the cooling passages are located in a radial direction.

5. The ceramic matrix component of any one of the preceding claims, wherein the cooling passages in the fibrous core terminate at a leading edge, a trailing edge or both.

6. The ceramic matrix component of any one of the preceding claims, wherein the cooling passages in the fibrous core connect to passages in the ceramic matrix composite shell.

7. The ceramic matrix component of any one of the preceding claims, wherein the fibrous core further comprises a ceramic foam.

8. The ceramic matrix component of claim 7, wherein the ceramic foam is present at a leading edge, a trailing edge or both.

9. A method of making a ceramic matrix component comprising forming a fibrous core having a three dimensional braided structure with carbon and ceramic fibers, partially densifying the fibrous core, pyrolyzing the carbon fibers to form passages, forming a fibrous preform on the partially densified fibrous core, and forming a ceramic matrix on the fibrous preform using chemical vapor infiltration.

10. The method of claim 9, wherein the ceramic matrix component is an airfoil, a combustor component, vane, blade, vanes, ceramic box shroud, or nozzle component.

11. The method of claim 9 or claim 10, wherein the passages are located in a radial direction.

12. The method of any one of claims 9 to 11, wherein the passages in the fibrous core terminate at a leading edge, a trailing edge or both.

13. The method of any one of claims 9 to 12, wherein the fibrous core further comprises a ceramic foam.

14. The method of claim 13, wherein the ceramic foam is present at a leading edge, a trailing edge or both.

15. The method of any one of claims 9 to 14, wherein the fibrous core has a porosity greater than the porosity of the fibrous preform, preferably wherein the porosity of the fibrous core is 2 to 3 times greater than the porosity of the fibrous preform.
